# EUROPÄISCHE PATENTANMELDUNG

(11) **EP 4 523 877 A1**
(43) Veröffentlichungstag der Anmeldung: **19.03.2025**
(21) Anmeldenummer: 23197598.8
(22) Anmeldetag: 15.09.2023
(51) Int. Cl.: B29B 17/02, B29K 105/06

(54) **BEHANDELN VON FASERVERSTÄRKTEN KUNSTSTOFFEN MITTELS TROCKENEISSTRAHLEN**

(71) Anmelder: P-COOL e.U., 4070 Pupping (AT)
(72) Erfinder: PFEIFFER, Robert, 4070 Pupping (AT)
(74) Vertreter: SONN Patentanwälte GmbH & Co KG

(57) **Zusammenfassung**

Die Erfindung betrifft ein Verfahren zur Rückgewinnung von Verstärkungsfasern aus einem faserverstärkten Kunststoff, umfassend die Schritte (a) Bereitstellen des faserverstärkten Kunststoffs, (b) Erhitzen des faserverstärkten Kunststoffs auf eine Temperatur T, wobei T ≥ Tg - 50 °C, und Tg die Glasübergangstemperatur des faserverstärkten Kunststoffs ist, und (c) Behandeln des erhitzten, faserverstärkten Kunststoffs mit einem Trockeneisstrahl bei einem Druck des Trockeneisstrahls von 3 bar oder darüber, um die Verstärkungsfasern zumindest teilweise vom Kunststoff abzutrennen und rückzugewinnen. Die Erfindung betrifft weiters eine Vorrichtung zur Rückgewinnung von Verstärkungsfasern aus einem faserverstärkten Kunststoff mit dem Verfahren.

## Beschreibung

Die vorliegende Erfindung betrifft ein Verfahren zur Rückgewinnung von Verstärkungsfasern aus einem faserverstärkten Kunststoff, sowie eine Vorrichtung zur Durchführung des Verfahrens.

Faserverstärkte Kunststoffe sind aufgrund ihrer niedrigen spezifischen Dichte, ihrem hohen Festigkeits-Gewichts-Verhältnis und ihrer guten Steifigkeitseigenschaften insbesondere im Leichtbau sehr attraktiv. Sie ermöglichen in unterschiedlichen Anwendungen und Branchen erhebliche Einsparungen an Gewicht und Energie. Heutzutage finden faserverstärkte Kunststoffe, vor allem kohlenstofffaserverstärkte Kunststoffe (CFK) und glasfaserverstärkte Kunststoffe (GFK), breiten Einsatz in Rotorblättern für Windkraftanlagen, im Flugzeug- und Schiffsbau sowie in Tanks (etwa zur Wasserstoffspeicherung). Das Recyceln faserverstärkter Kunststoffe stellt jedoch eine technische Herausforderung dar. Ein europaweites Deponierungsverbot wird angestrebt. Auch ist eine Verwertung in Abfallverbrennungsanlagen weder für CFK noch für GFK möglich, da durch die unvollständige Verbrennung Probleme im Abgasreinigungssystem auftreten können.

Das Recyceln von GFK erfolgt gegenwertig zumeist durch stoffliches Verwerten der Glasfasern im Klinker eines Zementwerks als Siliziumdioxid und energetisches Verwerten des Kunststoffs (Abschlussbericht zur "Entwicklung von Rückbau- und Recyclingstandards für Rotorblätter", Kühne C. et al., 2022). Ein weiteres Verfahren zum Recyceln von Rotorblättern aus GFK offenbart die DE 10 2010 046 685 A1. Durch mehrfache Zerkleinerung und Klassierung können eine Glasmehlfraktion und eine Organikfraktion sortenrein hergestellt werden.

Für CFK sind Pyrolyseverfahren derzeit die einzigen kommerziell eingesetzten Recyclingprozesse. Beispielsweise offenbart die DE 10 2015 221 373 A1 ein Verfahren, um in einem kohlenstofffaserverstärkten Epoxidharz enthaltene Verstärkungsfasern durch thermische Zersetzung des Epoxidharzes rückzugewinnen. Jedoch ist im Anschluss an die Pyrolyse meist eine Reinigung der Verstärkungsfasern von Epoxidharzresten in einer sauerstoffhaltigen Atmosphäre notwendig, wobei eine Schädigung der Verstärkungsfasern nicht ausgeschlossen ist (Abschlussbericht zur "Entwicklung von Rückbau- und Recyclingstandards für Rotorblätter", Kühne C. et al., 2022).

Im Stand der Technik sind einige weitere Verfahren bekannt, mit welchen in faserverstärkten Kunststoffen enthaltene Verstärkungsfasern rückgewonnen werden können. So offenbart die EP 2 764 970 A1 ein Verfahren zur Rückgewinnung von Verstärkungsfasern oder Armierungen aus großformatigen Formteilen aus Kunststoffverbundmaterialien, z.B. Rotoren von Windkraftanlagen und Schiffsrümpfen. Die Zerlegung der Formteile erfolgt mittels Sprengladungen, die z.B. in Hohlräumen von Rotorblättern angeordnet und anschließend aktiviert werden. In der DE 10 2007 058 893 A1 wird ein Verfahren beschrieben, um eine Faserfraktion aus einem Faserverbundwerkstoff zu separieren, sodass ein Wiedereinsatz der Verstärkungsfasern oder deren umweltverträgliche Entsorgung ermöglicht wird. Der Faserverbundwerkstoff wird vorzerkleinert und danach einer Prallmühle zugeführt, wobei ein Prallprodukt (z.B. Stahlkugeln, Keramikkugeln, etc.) beigemischt wird.

Die im Stand der Technik bekannten Verfahren, um Verstärkungsfasern aus einem faserverstärkten Kunststoff rückzugewinnen, sind in mehrerer Hinsicht nachteilig. Einerseits können Beschädigungen der Verstärkungsfasern und eine erhebliche Verkürzung der Faserlänge auftreten. Andererseits sind die Verfahren aufwändig; wenn etwa Sprengladungen verwendet werden, müssen erhebliche Sicherheitsvorkehrungen getroffen werden, und damit geht auch ein großer Verbrauch an Sprengladungen einher. Auch kommt es zum Verschleiß von Werkzeugen, etwa einer Prallmühle, was eine regelmäßige Wartung bzw. den Austausch dieser Werkzeuge erfordert.

Es besteht daher ein Bedarf an einem Verfahren, mit welchem Verstärkungsfasern aus einem faserverstärkten Kunststoff möglichst ohne Beschädigungen und unter zumindest teilweisem Erhalt ihrer Länge rückgewonnen werden können. Eine Aufgabe der gegenständlichen Erfindung ist es, ein solches Verfahren zur Verfügung zu stellen.

Die Erfindung betrifft ein Verfahren zur Rückgewinnung von Verstärkungsfasern aus einem faserverstärkten Kunststoff, umfassend die Schritte
(a) Bereitstellen des faserverstärkten Kunststoffs,
(b) Erhitzen des faserverstärkten Kunststoffs auf eine Temperatur T, wobei T ≥ Tg - 50 °C, und Tg die Glasübergangstemperatur des faserverstärkten Kunststoffs ist, und
(c) Behandeln des erhitzten, faserverstärkten Kunststoffs mit einem Trockeneisstrahl bei einem Druck des Trockeneisstrahls von 3 bar oder darüber, um die Verstärkungsfasern zumindest teilweise vom Kunststoff abzutrennen und rückzugewinnen.

Unter Verwendung eines Trockeneisstrahls können die Verstärkungsfasern nicht nur gut vom Kunststoff abgetrennt werden, sondern ihre ursprüngliche Länge kann auch möglichst beibehalten werden. Auch geht mit dem Verfahren kein Verschleiß von Werkzeugen einher. Die Erfindung liefert somit einen wertvollen Beitrag, um das bestehende Problem des Recycelns großformatiger Bauteile, die faserverstärkten Kunststoff enthalten (z.B. Rotorblätter von Windkraftanlagen), zu lösen.

Unter einem "faserverstärkten Kunststoff" wird eine Kombination aus einem Kunststoff und Verstärkungsfasern verstanden, wobei die Verstärkungsfasern zumindest teilweise im Kunststoff eingebettet sind. Unter "Verstärkungsfasern" werden Fasern verstanden, durch welche eine oder mehrere Eigenschaft(en) des Kunststoffs verbessert werden, insbesondere seine Härte, Steifigkeit und/oder Bruchspannung. Die Verstärkungsfasern können Glasfasern und/oder Kohlenstofffasern sein. Der faserverstärkte Kunststoff kann eine Verstärkungsfaserschicht (z.B. Gewebe, Gelege) aufweisen, in welcher die Verstärkungsfasern enthalten sind. Der Begriff "faserverstärkter Kunststoff" beinhaltet auch ein Bauteil (z.B. ein Rotorblatt einer Windkraftanlage, einen Schiffs- oder Flugzeugsrumpf, einen Tank (etwa zur Wasserstoffspeicherung)), in welchem der faserverstärkte Kunststoff enthalten ist.

Der faserverstärkte Kunststoff enthält vorzugsweise einen Faseranteil von 20 Gew% oder darüber, bevorzugter 40 Gew% oder darüber, noch bevorzugter 60 Gew% oder darüber, bezogen auf das Gewicht des faserverstärkten Kunststoffs. Je höher der Faseranteil ist, umso wirtschaftlicher kann das Verfahren durchgeführt werden, da somit eine größere Fasermenge bezogen auf die eingesetzte Trockeneismenge rückgewonnen werden kann.

Der in Schritt (a) bereitgestellte, faserverstärkte Kunststoff weist vorzugsweise eine Länge von 15 m oder darunter auf, bevorzugter von 10 m oder darunter, noch bevorzugter von 5 m oder darunter; und/oder vorzugsweise eine Fläche von 20 m² oder darunter, bevorzugter von 15 m² oder darunter, noch bevorzugter von 10 m² oder darunter, noch bevorzugter von 5 m² oder darunter. Dies vereinfacht die Handhabung des faserverstärkten Kunststoffs beim Behandeln und ggf. bei einem vorgehenden Transport zu einem Ort, an dem das Verfahren durchgeführt wird.

Der bereitgestellte, faserverstärkte Kunststoff kann durch Zerkleinern erhalten werden, insbesondere, falls seine Größe bzw. Länge die zuvor genannten Bereiche übersteigt. Dadurch kann die Handhabung des faserverstärkten Kunststoffs im Verfahren erleichtert werden. Das Zerkleinern kann mit einem Schneidmedium erfolgen. Das Schneidmedium kann einen Wasserstrahl, einen Druckluftstrahl und/oder einen Trockeneisstrahl enthalten, dem ein abrasives Schneidmittel (z.B. Trockeneis, Schlacke, Korund, Granatsand, Glasperlen und/oder Hartgusspulver) beigemengt werden kann. Vorzugsweise erfolgt das Zerkleinern des faserverstärkten Kunststoffs mit einem Trockeneisstrahl. Trockeneisstrahlen ist eine effiziente Methode, um faserverstärkte Kunststoffe zu zerkleinern. Da außerdem auch für das Behandeln des faserverstärkten Kunststoffs Trockeneis verwendet wird, vereinfacht dies die Durchführung des Verfahrens.

Bevorzugt ist es, wenn vor Schritt (a) ein Fremdstoff vom faserverstärkten Kunststoff abgetrennt wird. Dann können die Verstärkungsfasern beim nachfolgenden Behandeln sortenrein vom Kunststoff abgetrennt werden, ohne dass sie durch den Fremdstoff verunreinigt würden. Der Fremdstoff kann ein Metall, einen Kunststoffschaum, eine Beschichtung, einen Lack, einen Klebstoff, ein Holz oder eine Mischung davon enthalten. Bei einem Rotorblatt einer Windkraftanlage kann der Fremdstoff z.B. eine metallhaltige (insbesondere stahlhaltige) Rotorblattbefestigungskomponente, eine metallhaltige Unwuchtmasse, eine kupferhaltige Blitzschutzeinrichtung, einen Kunststoffschaum, Balsaholz, einen Lack, eine Beschichtung und/oder einen Klebstoff enthalten. Der Fremdstoff kann mit einem Schneidmedium vom faserverstärkten Kunststoff abgetrennt werden. Das Schneidmedium kann einen Wasserstrahl, einen Druckluftstrahl und/oder einen Trockeneisstrahl enthalten, dem ein abrasives Schneidmittel (z.B. Trockeneis, Schlacke, Korund, Granatsand, Glasperlen und/oder Hartgusspulver) beigemengt werden kann. Vorzugsweise wird der Fremdstoff mit einem Trockeneisstrahl vom faserverstärkten Kunststoff abgetrennt. Trockeneis eignet sich gut zum Abtrennen von Fremdstoffen, insbesondere Balsaholz und Kunststoffschaum. Da außerdem auch für das Behandeln des faserverstärkten Kunststoffs Trockeneis verwendet wird, vereinfacht dies die Durchführung des Verfahrens.

In Schritt (b) wird der faserverstärkte Kunststoff auf die Temperatur T erhitzt, wobei T ≥ Tg - 50 °C, und wobei Tg die Glasübergangstemperatur des faserverstärkten Kunststoffs ist. Der Glasübergangsbereich kennzeichnet jenen Temperaturbereich, in welchem der faserverstärkte Kunststoff vom energieelastischen (d.h. glasartigen) Zustand in den entropieelastischen (d.h. gummiartigen) Zustand übergeht. Die Tg des faserverstärkten Kunststoffs gibt den Wendepunkt der endothermen Stufe des Glasübergangsbereichs an. Die Tg kann mittels einer DSC-Messung gemäß der Norm ISO 11357-2:2020-08 ermittelt werden, wobei die Messung unter Stickstoff erfolgen kann und ein Probengewicht von 10 bis 15 mg verwendet werden kann. Die Probe kann mit 20 K/min von 25 bis 300 °C aufgeheizt werden, und die Tg kann aus dieser Aufheizkurve ermittelt werden.

Die Temperatur T = Tg - 50 °C liegt im Bereich des Beginns des Glasübergangsbereichs, in welchem die Kettenbeweglichkeit zunimmt und die Erweichung des faserverstärkten Kunststoffs bereits beginnt. Überraschenderweise wird durch das Erhitzen des faserverstärkten Kunststoffs auf die Temperatur T, die obige Bedingung erfüllt, das Abtrennen der Verstärkungsfasern vom faserverstärkten Kunststoff beim nachfolgenden Behandeln mit dem Trockeneisstrahl erst ermöglicht. Hingegen zeigt ein Behandeln eines nicht auf die Temperatur T erhitzten, faserverstärkten Kunststoffs mit dem Trockeneisstrahl keine Wirkung.

Vorzugsweise erfüllt die Temperatur T, auf welche der faserverstärkte Kunststoff in Schritt (b) erhitzt wird, die Bedingung T ≥ Tg - 40 °C, bevorzugter T ≥ Tg - 30 °C, noch bevorzugter T ≥ Tg - 20 °C, noch bevorzugter T ≥ Tg - 10 °C, besonders bevorzugt T ≥ Tg. Die Beweglichkeit des Kunststoffs nimmt zu, je näher die Temperatur T unterhalb der Tg liegt, bzw. ist seine Beweglichkeit noch höher, wenn die Temperatur T der Tg entspricht oder sogar darüber liegt. Dementsprechend leichter können die Verstärkungsfasern dann vom Kunststoff abgetrennt werden.

Bevorzugt ist es, wenn die Temperatur T, auf welche der faserverstärkte Kunststoff in Schritt (b) erhitzt wird, die Bedingung Tg - 50 °C ≤ T ≤ 400 °C erfüllt, bevorzugter Tg - 50 °C ≤ T ≤ 350 °C, noch bevorzugter Tg - 50 °C ≤ T ≤ 300 °C, besonders bevorzugt Tg - 50 °C ≤ T ≤ 260 °C. Dadurch kann sowohl eine leichte Abtrennung der Verstärkungsfasern vom Kunststoff ermöglicht werden, als auch eine thermische Schädigung der Verstärkungsfasern vermieden werden. Ein Überschreiten des genannten Temperaturbereichs kann insbesondere bei Glasfasern aufgrund deren (im Vergleich zu Kohlenstofffasern) geringer thermischer Stabilität kritisch sein und könnte zu Beschädigungen führen, etwa zum Zerbrechen der Verstärkungsfasern. Noch bevorzugter ist es, wenn die Temperatur T, auf welche der faserverstärkte Kunststoff in Schritt (b) erhitzt wird, die Bedingung Tg ≤ T ≤ 400 °C erfüllt, bevorzugter Tg ≤ T ≤ 350 °C, noch bevorzugter Tg ≤ T ≤ 300 °C, besonders bevorzugt Tg ≤ T ≤ 260 °C. Vorzugsweise liegt die Temperatur T des faserverstärkten Kunststoffs bei 100 °C oder darüber, bevorzugter bei 150 °C oder darüber, noch bevorzugter bei 200 °C oder darüber, noch bevorzugter bei 250 °C oder darüber, noch bevorzugter bei 300 °C oder darüber; und/oder bei 400 °C oder darunter, bevorzugter bei 350 °C oder darunter, noch bevorzugter bei 300 °C oder darunter, noch bevorzugter bei 260 °C oder darunter.

Vorzugsweise liegt eine Differenz der thermischen Längenausdehnungskoeffizienten des Kunststoffs und der Verstärkungsfasern in Faserrichtung bei 40 · 10⁻⁶ K⁻¹ oder darüber, bevorzugter bei 50 · 10⁻⁶ K⁻¹ oder darüber, noch bevorzugter bei 60 · 10⁻⁶ K⁻¹ oder darüber. Wenn der faserverstärkte Kunststoff erhitzt wird, kommt es dann zu einer derart unterschiedlichen Wärmeausdehnung des Kunststoffs und der Verstärkungsfasern, dass dadurch beim nachfolgenden Behandeln die Verstärkungsfasern leichter vom Kunststoff abgetrennt werden können. Beispielsweise kann ein Epoxidharz einen thermischen Längenausdehnungskoeffizienten von 60 bis 70 · 10⁶ K⁻¹ aufweisen. Glasfasern können einen thermischen Längenausdehnungskoeffizienten in Faserrichtung von 4 bis 6 · 10⁻⁶ K⁻¹ aufweisen. Kohlenstofffasern können einen thermischen Längenausdehnungskoeffizienten in Faserrichtung von 3 bis 15 · 10⁻⁶ K⁻¹ aufweisen, je nachdem, ob die Kohlenstofffasern isotrop, hochfest (d.h. karbonisiert) oder hochmodulig (d.h. graphitisiert) sind. Der thermische Längenausdehnungskoeffizient kann mittels thermomechanischer Analyse (TMA) unter Verwendung der Norm DIN 53752 ermittelt werden, wobei vorzugsweise eine Last von 5 g aufgebracht wird. Vorzugsweise ist der thermische Längenausdehnungskoeffizient der mittlere thermische Längenausdehnungskoeffizient.

Enthält der bereitgestellte, faserverstärkte Kunststoff zwei oder mehr übereinanderliegende Verstärkungsschichten (wie dies etwa bei einem CFK-Gurt für ein Rotorblatt einer Windkraftanlage der Fall ist), ist es bevorzugt, wenn die Verstärkungsschichten zwischen den Schritten (b) und (c) voneinander getrennt werden. Dabei ist die Richtung, in welcher der Trockeneisstrahl auf den faserverstärkten Kunststoff auftrifft, vorzugsweise parallel zu Ebenen, in welchen die übereinanderliegenden Verstärkungsschichten angeordnet sind. Vorzugsweise wird der Trockeneisstrahl entlang einer Verbindungsfläche der übereinanderliegenden, erhitzten Verstärkungsschichten geführt. Dadurch können die Verstärkungsschichten effizient voneinander getrennt werden. Mit der Verbindungsfläche ist eine Fläche einer Verstärkungsschicht gemeint, die an eine Fläche einer unmittelbar benachbarten Verstärkungsschicht angrenzt. Nachfolgend kann der erhitzte, faserverstärkte Kunststoff, der in den Verstärkungsschichten enthalten ist, in Schritt (c) mit dem Trockeneisstrahl behandelt werden.

In Schritt (c) wird der erhitzte, faserverstärkte Kunststoff mit einem Trockeneisstrahl bei einem Druck des Trockeneisstrahls von 3 bar oder darüber behandelt. Dadurch können die Verstärkungsfasern zumindest teilweise vom Kunststoff abgetrennt werden. Der Kunststoff kann durch das Behandeln mit dem Trockeneisstrahl in Partikel bzw. Staub zerfallen.

Trockeneis hat bei Normaldruck (1,013 bar) eine Temperatur von -78,4 °C oder darunter. Beispielsweise kann der im Verfahren verwendete Trockeneisstrahl eine Temperatur von -79,5 °C haben. Bevor der Trockeneisstrahl auf den faserverstärkten Kunststoff auftrifft, liegt das Trockeneis als festes Kohlenstoffdioxid vor. Beim Auftreffen auf den erhitzten, faserverstärkten Kunststoff erwärmt sich das Trockeneis und sublimiert, sodass es in gasförmiges Kohlenstoffdioxid übergeht. Dadurch vergrößert sich sein Volumen explosionsartig auf das ca. 760-fache, was (neben dem Bestrahlen mit erhöhtem Druck) maßgeblich zum Abtrennen der Verstärkungsfasern vom Kunststoff beiträgt. Durch das Behandeln mit dem Trockeneisstrahl kann es aufgrund der damit verbundenen Abkühlung zu lokalen Temperaturunterschieden im faserverstärkten Kunststoff kommen. Daher wird der faserverstärkte Kunststoff vorzugsweise auch in Schritt (c) erhitzt. Somit kann auch mit fortschreitender Behandlungsdauer eine gute Abtrennung der Verstärkungsfasern vom Kunststoff gewährleistet werden.

Vorzugsweise erfolgt das Behandeln des faserverstärkten Kunststoffs mit dem Trockeneisstrahl bei einem Druck des Trockeneisstrahls von 4 bar oder darüber, bevorzugter von 5 bar oder darüber, noch bevorzugter von 6 bar oder darüber, besonders bevorzugt von 8 bar oder darüber. Mit dem Druck des Trockeneisstrahls ist dabei der Druck gemeint, mit welchem der Trockeneisstrahl auf den faserverstärkten Kunststoff auftrifft. Durch eine Erhöhung des Drucks des Trockeneisstrahls kann die Effizienz beim Abtrennen der Verstärkungsfasern vom Kunststoff verbessert werden. Eine Optimierung der Verfahrenseffizienz ist insbesondere bei einem Druck von 5 bar oder darüber gegeben. Vorzugsweise erfolgt das Behandeln bei einem Druck von 3 bis 17 bar, bevorzugter von 4 bis 12 bar, noch bevorzugter von 5 bis 10 bar. Dieser Druckbereich erweist sich als besonders geeignet, um einerseits die Verstärkungsfasern möglichst vollständig vom Kunststoff abzutrennen, und andererseits eine Beschädigung der Verstärkungsfasern durch einen zu hohen Druck zu vermeiden.

Vorzugsweise wird der faserverstärkte Kunststoff mit einem Massenstrom des Trockeneisstrahls von 30 kg/h oder darüber behandelt, bevorzugter von 40 kg/h oder darüber, noch bevorzugter von 45 kg/h oder darüber, noch bevorzugter von 60 kg/h oder darüber, besonders bevorzugt von 70 kg/h oder darüber. Dadurch kann das Behandeln möglichst effizient erfolgen. Der Massenstrom des Trockeneisstrahls liegt vorzugsweise im Bereich von 30 bis 200 kg/h, bevorzugter von 40 bis 160 kg/h, noch bevorzugter von 45 kg/h bis 100 kg/h, besonders bevorzugt von 75 bis 85 kg/h. Dieser Bereich erweist sich als besonders geeignet, um eine gute Verfahrenseffizienz bei guter Faserqualität zu erreichen. Bei einer besonders bevorzugten Ausführungsform der vorliegenden Erfindung wird in einem ersten Bearbeitungsschritt die Schnittkante des faserverstärkten Kunststoffs wie zuvor beschrieben erhitzt und es werden mit einem hohen Trockeneisstrahldruck (ca. 17 bar +/- 2 bar) und einem Massenstrom von ca. 160 kg/h (+/- 20 kg/h) sehr gute Resultate erzielt, was ein schollenförmiges Aufweiten des Kunststoffkörpers betrifft.

Der Trockeneisstrahl trifft vorzugsweise in einem Winkel von maximal 20° abweichend von einer Faserrichtung auf den faserverstärkten Kunststoff auf, bevorzugter maximal 15°, noch bevorzugter maximal 10°, noch bevorzugter maximal 5°, besonders bevorzugt maximal 2,5°. Dann kann die Abtrennung der Verstärkungsfasern (insbesondere die Abtrennung von im Wesentlichen in diese Faserrichtung ausgerichteten Verstärkungsfasern) vom Kunststoff besonders effizient erfolgen. Auch kann eine Beschädigung der Verstärkungsfasern, insbesondere ein Zerbrechen, dann bestmöglich vermieden werden. Weist der faserverstärkte Kunststoff zwei oder mehr Faserrichtungen auf (etwa, weil er ein Gewebe enthält, das z.B. einen 0/90°-Aufbau hat), ist mit der Faserrichtung eine der vorhandenen Faserrichtungen gemeint.

Beim Behandeln in Schritt (c) wird der Trockeneisstrahl vorzugsweise relativ zum faserverstärkten Kunststoff bewegt. Dann kann der Trockeneisstrahl zielgerichtet geführt werden, um an verschiedenen Stellen im Kunststoff angeordnete Verstärkungsfasern abzutrennen. Während der Trockeneisstrahl bewegt wird, insbesondere in Faserrichtung, wird der faserverstärkte Kunststoff vorzugsweise auseinandergezogen, etwa entlang eines gebildeten Risses im Kunststoff, entlang welchem sich Verstärkungsfasern zumindest teilweise vom Kunststoff abgetrennt haben. Dadurch kann ein weiterer Teil des faserverstärkten Kunststoffs zugänglich gemacht werden, um auch diesen mit dem Trockeneisstrahl zu behandeln.

Vorzugsweise wird der Trockeneisstrahl mit einer Geschwindigkeit von 0,1 m/min oder darüber bewegt, bevorzugter 0,3 m/min oder darüber, noch bevorzugter 0,5 m/min oder darüber. Dies kann zu einer effizienten Verfahrensführung beitragen. Bevorzugt liegt die Geschwindigkeit des Trockeneisstrahls bei 1,5 m/min oder darunter, bevorzugter 1,0 m/min oder darunter, noch bevorzugter 0,8 m/min oder darunter. Dann kann eine möglichst vollständige Abtrennung der Verstärkungsfasern erfolgen.

Das Behandeln des faserverstärkten Kunststoffs mit dem Trockeneisstrahl erfolgt vorzugsweise unter Unterdruck, bevorzugt bei einem Druck von 800 mbar oder darunter, bevorzugter von 700 mbar oder darunter, noch bevorzugter von 600 mbar oder darunter. Dadurch kann sichergestellt werden, dass kein signifikanter Materialeintrag in die Umgebung stattfindet, was die Prozesssicherheit erhöhen kann.

Vorzugsweise erfolgt das Behandeln des faserverstärkten Kunststoffs mit dem Trockeneisstrahl in einer Atmosphäre, die zumindest 50 Vol% Kohlenstoffdioxid enthält, bevorzugter zumindest 70 Vol%, noch bevorzugter zumindest 90 Vol%, noch bevorzugter zumindest 99 Vol%, besonders bevorzugt 100 Vol%, jeweils bezogen auf das Volumen der Atmosphäre (z.B. das Volumen in einer Behandlungseinheit). Je mehr Kohlenstoffdioxid in der Atmosphäre enthalten ist, umso einfacher gestaltet sich ein nachfolgendes Reinigen des aus dem Trockeneis sublimierten Kohlenstoffdioxids. Enthält die Atmosphäre 100 Vol% Kohlenstoffdioxid, kann eine Abtrennung von anderen Gasen (z.B. Sauerstoff, Stickstoff) beim Reinigen des gasförmigen Kohlenstoffdioxids entfallen. Auch kommt es dann mit fortdauernder Behandlungsdauer zu keiner (bzw. keiner signifikanten) Veränderung der Atmosphäre, sodass im Wesentlichen gleichbleibende Verfahrensbedingungen gewährleistet werden können. Weiters können mögliche oxidative Abbaureaktionen der Verstärkungsfasern, die beim Behandeln mit dem Trockeneisstrahl ansonsten auftreten könnten, dadurch vermieden werden.

Vorzugsweise wird der erhitzte, faserverstärkte Kunststoff in Schritt (c) gleichzeitig mit einem ersten Trockeneisstrahl und einem zweiten Trockeneisstrahl behandelt, wobei der erste Trockeneisstrahl in einem Winkel von maximal 5°, vorzugsweise maximal 2,5°, abweichend von der Faserrichtung auf den faserverstärkten Kunststoff auftrifft und der zweite Trockeneisstrahl in einem Winkel von mindestens 40°, vorzugsweise mindestens 42,5°, abweichend von derselben Faserrichtung auf den faserverstärkten Kunststoff auftrifft. Besonders bevorzugt trifft der erste Trockeneisstrahl im Wesentlichen in Faserrichtung auf den faserverstärkten Kunststoff auf und der zweite Trockeneisstrahl im Wesentlichen senkrecht zur selben Faserrichtung. Durch ein derartiges gleichzeitiges Bestrahlen mit zwei Trockeneisstrahlen können die Verstärkungsfasern (insbesondere die im Wesentlichen in diese Faserrichtung ausgerichteten Verstärkungsfasern) besonders effizient vom Kunststoff abgetrennt werden, und insbesondere kann eine Länge der Verstärkungsfasern von zumindest 50%, vorzugsweise zumindest 60%, noch bevorzugter zumindest 70%, besonders bevorzugt zumindest 80%, erhalten bleiben, bezogen auf die ursprüngliche Länge der Verstärkungsfasern.

Die vom Kunststoff zumindest teilweise abgetrennten Verstärkungsfasern haben vorzugsweise eine Länge von 12 mm oder darüber, bevorzugter 20 mm oder darüber, noch bevorzugter 30 mm oder darüber, besonders bevorzugt 40 mm oder darüber. Mit dem erfindungsgemäßen Verfahren können somit Verstärkungsfasern rückgewonnen werden, die eine vergleichsweise große Länge aufweisen und sich daher gut in verschiedensten Anwendungen wiederverwenden lassen. Die Verstärkungsfasern können nachfolgend gesammelt werden, etwa in einem Sammelbehälter, um sie einer weiteren Verwendung zuzuführen. Beispielsweise können die Verstärkungsfasern wieder zur Herstellung eines faserverstärkten Kunststoffs verwendet werden.

Wenn nach Schritt (c) noch Kunststoff an den abgetrennten Verstärkungsfasern anhaftet, kann das Verfahren, bzw. zumindest Schritt (c), einmal oder mehrmals wiederholt werden. Dadurch können Verstärkungsfasern mit einer höheren Reinheit rückgewonnen werden.

Das Verfahren kann einen weiteren Schritt (d) umfassen, worin das in Schritt (c) beim Behandeln des faserverstärkten Kunststoffs mit dem Trockeneisstrahl entstandene, gasförmige Kohlenstoffdioxid gereinigt und zum Herstellen von Trockeneis verwendet wird. Das erhaltene Trockeneis wird vorzugsweise im Verfahren wiederverwendet. Dadurch kann die Nachhaltigkeit des Verfahrens maßgeblich verbessert werden. Beim Reinigen des gasförmigen Kohlenstoffdioxids können kunststoffhaltige Verunreinigungen (z.B. Kunststoffstaub, Kunststoffpartikel) und/oder in der Atmosphäre beim Behandeln vorhandene andere Gase (z.B. Sauerstoff, Stickstoff) abgetrennt werden. Aus dem gereinigten, gasförmigen Kohlenstoffdioxid kann dann durch entsprechende Druck- und Temperaturführung Trockeneis hergestellt werden. Die Herstellung von Trockeneis ist im Stand der Technik bekannt und beinhaltet das Entspannen von unter Druck verflüssigtem Kohlenstoffdioxid.

Die Erfindung betrifft weiters eine Vorrichtung zur Rückgewinnung von Verstärkungsfasern aus dem faserverstärkten Kunststoff mit dem erfindungsgemäßen Verfahren, aufweisend
einen Vorratsbehälter zum Bereitstellen von Trockeneis,
eine Heizungseinheit zum Erhitzen des faserverstärkten Kunststoffs, und
eine Behandlungseinheit zum Behandeln des faserverstärkten Kunststoffs mit dem Trockeneisstrahl, wobei die Behandlungseinheit eine mit dem Vorratsbehälter verbundene Zuführeinheit zum Zuführen des Trockeneisstrahls in die Behandlungseinheit aufweist,
sowie gegebenenfalls eine mit der Behandlungseinheit verbundene Reinigungseinheit für das beim Behandeln des faserverstärkten Kunststoffs mit dem Trockeneisstrahl entstandene gasförmige Kohlenstoffdioxid.

Der Vorratsbehälter ist vorzugsweise über eine Pumpe, insbesondere eine Hochdruckpumpe, mit der Zuführeinheit verbunden. Dadurch kann der Druck des Trockeneistrahls erhöht werden, und damit einhergehend die Ausbeute an zumindest teilweise vom Kunststoff abgetrennten Verstärkungsfasern. Die Hochdruckpumpe kann eingerichtet sein, einen Druck des Trockeneisstrahls von zumindest 4 bar zu erzeugen, vorzugsweise zumindest 5 bar, bevorzugter zumindest 6 bar, noch bevorzugter zumindest 8 bar.

Die Heizungseinheit ist vorzugsweise in der Behandlungseinheit angeordnet. Dies ist einerseits vorteilhaft, weil der faserverstärkte Kunststoff nach seinem Erhitzen sogleich mit dem Trockeneisstrahl behandelt werden kann, ohne dass er erst in die Behandlungseinheit gebracht werden müsste. Da somit das Behandeln mit dem Trockeneisstrahl unmittelbar nach dem Erhitzen erfolgen kann, kann ein unerwünschtes Abkühlen des faserverstärkten Kunststoffs vor dem Behandeln vermieden werden. Diese Anordnung hat weiters den Vorteil, dass der faserverstärkte Kunststoff auch beim Behandeln weiter erhitzt werden kann, sodass auch mit fortschreitender Behandlungsdauer eine gute Abtrennung der Verstärkungsfasern vom Kunststoff gewährleistet werden kann. Die Heizeinheit kann einen Infrarotstrahler aufweisen. Dann kann ein zielgerichtetes Erhitzen des faserverstärkten Kunststoffs erfolgen.

Die Zuführeinheit ist eingerichtet, den Trockeneisstrahl in die Behandlungseinheit zuzuführen. Für diese Zwecke weist die Zuführeinheit eine Austrittsöffnung auf, durch die der Trockeneisstrahl zugeführt werden kann. Die Zuführeinheit weist vorzugsweise eine Düse auf, besonders bevorzugt eine Runddüse oder eine Flachdüse. Die Düse ist vorzugsweise unmittelbar an die Austrittsöffnung der Zuführeinheit angrenzend angeordnet. Mittels der Düse kann die Geschwindigkeit, mit welcher der Trockeneisstrahl aus der Zuführeinheit austritt, erhöht werden. Dadurch können die Verfahrenseffizienz und die Ausbeute an zumindest teilweise vom Kunststoff abgetrennten Verstärkungsfasern erhöht werden.

Bevorzugt weist die Zuführeinheit eine erste Austrittsöffnung und eine zweite Austrittsöffnung zum gleichzeitigen Zuführen eines ersten und zweiten Trockeneisstrahls in die Behandlungseinheit auf. Vorzugsweise weist die Zuführeinheit dann zwei Düsen auf, wobei jede der Düsen unmittelbar an eine der Austrittsöffnungen angrenzend angeordnet ist. Eine erste Austrittsöffnung kann eine Runddüse aufweisen und eine zweite Austrittsöffnung kann eine Flachdüse aufweisen; beide Austrittsöffnungen können eine Runddüse aufweisen; oder beide Austrittsöffnungen können eine Flachdüse aufweisen. Alternativ oder zusätzlich weist die Behandlungseinheit vorzugsweise zwei mit dem Vorratsbehälter verbundene Zuführeinheiten zum Zuführen eines ersten und zweiten Trockeneistrahls in die Behandlungseinheit auf, wobei jede Zuführeinheit eine Austrittsöffnung aufweist.

Es ist bevorzugt, wenn die Behandlungseinheit ein Förderband zum Bewegen des faserverstärkten Kunststoffs aufweist. Insbesondere bei einem großformatigen Bauteil, das den faserverstärkten Kunststoff enthält, kann dies vorteilhaft sein, um durch entsprechendes Bewegen des Bauteils entlang des Förderbands eine bestimmte Position des Bauteils relativ zur Zuführeinheit einzustellen. Dann kann eine bestimmte Stelle des faserverstärkten Kunststoffs mit dem Trockeneisstrahl behandelt werden. Auch können die zumindest teilweise vom Kunststoff abgetrennten Verstärkungsfasern auf das Förderband fallen und durch Bewegen des Förderbands leicht zu einem gewünschten Ort (z.B. einem Sammelbehälter) transportiert werden. Der faserverstärkte Kunststoff wird vorzugsweise am Förderband befestigt. Dann kann er beim Behandeln nicht verrutschen. Für die Befestigung können übliche Befestigungsmittel verwendet werden, beispielsweise kann der faserverstärkte Kunststoff mit einem doppelseitigen Klebeband und/oder mit einem Seil am Förderband befestigt werden.

Vorzugsweise weist die Behandlungseinheit einen Roboter auf, an welchem die Zuführeinheit befestigt ist. Dann kann das Behandeln des Kunststoffs mit dem Trockeneisstrahl automatisiert erfolgen. Der Roboter ist vorzugsweise ein Knickarmroboter. Dieser weist gelenkig miteinander verbundenen Armglieder auf, wodurch eine besonders hohe Beweglichkeit ermöglicht wird. Die Zuführeinheit ist vorzugsweise an einem Arm des Roboters befestigt, wobei die Austrittsöffnung der Zuführeinheit vorzugsweise an einem distalen Ende des Arms angeordnet ist. Somit ist die Zuführeinheit räumlich frei positionierbar und kann entsprechend der jeweilige Geometrie des faserverstärkten Kunststoffs angeordnet werden.

Wenn die Behandlungseinheit einen Roboter aufweist, weist sie vorzugsweise auch einen Sensor auf, der eingerichtet ist, einen Arbeitsraum des Roboters zu erfassen. Der Arbeitsraum des Roboters kann das Innere der Behandlungseinheit sein, oder zumindest ein Teil davon, in welchem das Behandeln erfolgt. Der Sensor kann eine Kamera, einen Ultraschallsensor, einen Infrarotsensor und/oder einen Laserscanner aufweisen. Mit dem Sensor kann ein ortsaufgelöstes Signal erzeugt werden. Die Behandlungseinheit kann auch zwei oder mehr Sensoren aufweisen. Diese können an unterschiedlichen Stellen im Arbeitsraum angeordnet sein. Dadurch kann die Positionsgenauigkeit des Roboters weiter verbessert werden. Weiters weist die Vorrichtung vorzugsweise eine Steuereinheit auf, die mit dem Sensor verbunden ist und eingerichtet ist, auf Grundlage eines vom Sensor übermittelten Signals den Roboter zu steuern. Die Steuereinheit kann außerhalb der Behandlungseinheit angeordnet sein, sodass ein Benutzer den Roboter steuern kann, ohne die Behandlungseinheit betreten zu müssen. Dies kann insbesondere vorteilhaft sein, wenn in der Behandlungseinheit der Kohlenstoffdioxidgehalt gegenüber dem in der Umgebungsatmosphäre normalerweise vorhandenen Kohlenstoffdioxidgehalt erhöht ist.

Wenn die Zuführeinheit zwei Austrittsöffnungen aufweist, weist der Roboter vorzugsweise zwei Arme auf, wobei die erste Austrittsöffnung an einem ersten Arm des Roboters angeordnet ist, insbesondere an einem distalen Ende des ersten Arms, und die zweite Austrittsöffnung an einem zweiten Arm des Roboters, insbesondere an einem distalen Ende des zweiten Arms. Dies ermöglicht es, den ersten und zweiten Trockeneisstrahl in voneinander verschiedenen Winkeln auf den faserverstärkten Kunststoff auftreffen zu lassen. Alternativ oder zusätzlich kann die Behandlungseinheit zwei Roboter aufweisen, wobei an jedem Roboter eine Zuführeinheit mit einer Austrittsöffnung befestigt ist.

Der Roboter weist vorzugsweise einen Greifarm auf, der eingerichtet ist, einen Teil des faserverstärkten Kunststoffs zu bewegen, insbesondere auseinanderzuziehen. Während der Trockeneisstrahl relativ zum faserverstärkten Kunststoff bewegt wird, insbesondere in Faserrichtung, kann ein Teil des faserverstärkten Kunststoffs mit dem Greifarm auseinandergezogen werden, etwa entlang eines gebildeten Risses im Kunststoff, entlang welchem sich Verstärkungsfasern zumindest teilweise vom Kunststoff abgetrennt haben. Bevorzugt weist der Roboter zwei Greifarme auf. Dann kann ein Auseinanderziehen des faserverstärkten Kunststoffs gleichmäßig, insbesondere beidseitig, erfolgen. Alternativ kann die Behandlungseinheit auch einen (separaten) Handhabungsroboter aufweisen, der den Greifarm aufweist.

Die Behandlungseinheit weist vorzugsweise eine Pumpe auf, die eingerichtet ist, in der Behandlungseinheit einen bestimmten Druck, insbesondere einen Unterdruck, einzustellen. Durch Einstellen eines Unterdrucks kann sichergestellt werden, dass kein signifikanter Materialeintrag in die Umgebung stattfindet, was die Prozesssicherheit erhöhen kann.

Bevorzugt weist die Vorrichtung weiters einen Sammelbehälter auf, um die vom Kunststoff zumindest teilweise abgetrennten Verstärkungsfasern zu sammeln. Der Sammelbehälter kann im bestimmungsgemäßen Zustand der Behandlungseinheit unterhalb des faserverstärkten Kunststoffs angeordnet sein, sodass die zumindest teilweise abgetrennten Verstärkungsfasern schwerkraftsbedingt in den Sammelbehälter fallen. Weist die Behandlungseinheit ein Förderband auf, können die zumindest teilweise abgetrennten Verstärkungsfasern zuerst auf das Förderband fallen. Der Sammelbehälter kann an einem Ende des Förderbands derart angeordnet sein, dass die Verstärkungsfasern durch entsprechendes Bewegen des Förderbands vom Förderband in den Sammelbehälter fallen können.

Vorzugsweise weist die Vorrichtung eine Reinigungseinheit auf, die mit der Behandlungseinheit verbunden ist. In der Reinigungseinheit kann das gasförmige Kohlenstoffdioxid (welches sich durch Sublimation des Trockeneises gebildet hat) gereinigt werden. Beispielweise können kunststoffhaltige Verunreinigungen und/oder andere Gase (z.B. Sauerstoff, Stickstoff) vom gasförmigen Kohlenstoffdioxid abgetrennt werden. Die Reinigungseinheit kann für diese Zwecke einen Filter aufweisen, insbesondere einen Membranfilter. Hierdurch ist eine effiziente Reinigung des gasförmigen Kohlenstoffdioxids möglich.

Vorzugsweise weist die Vorrichtung einen Abzug zum Abziehen des gasförmigen Kohlenstoffdioxids aus der Behandlungseinheit auf. Damit kann das gasförmige Kohlenstoffdioxid effizient abgezogen und vorzugsweise nachfolgend der Reinigungseinheit zugeführt werden.

Die Reinigungseinheit ist vorzugsweise mit dem Vorratsbehälter verbunden. Dann kann das in der Reinigungseinheit gereinigte, gasförmige Kohlenstoffdioxid dem Vorratsbehälter zugeführt werden. Im Vorratsbehälter kann dann durch entsprechende Druck- und Temperaturführung Trockeneis aus dem gasförmigen Kohlenstoffdioxid hergestellt werden. Die Wiedergewinnung des Trockeneises trägt erheblich zur Nachhaltigkeit bei.

Vorzugsweise weist die Vorrichtung weiters eine Zerkleinerungseinheit zum Zerkleinern des faserverstärkten Kunststoffs auf. Das Zerkleinern kann die nachfolgende Handhabung des faserverstärkten Kunststoffs beim Behandeln mit dem Trockeneisstrahl erleichtern. Das Zerkleinern kann notwendig sein, wenn der faserverstärkte Kunststoff aufgrund seiner Größe ansonsten nicht zum Behandeln in der Behandlungseinheit untergebracht werden könnte. Mit der Zerkleinerungseinheit können z.B. Rotorblätter für Windkraftanlagen, Schiffsrümpfe, Flugzeugrümpfe und/oder Tanks, die den faserverstärkten Kunststoff enthalten, vorab in Teile zerkleinert werden, und diese Teile können nachfolgend einzeln in der Behandlungseinheit behandelt werden.

Die Zerkleinerungseinheit kann der Behandlungseinheit entweder vorgeschaltet sein, oder sie kann in der Behandlungseinheit angeordnet sein. Die Anordnung der Zerkleinerungseinheit relativ zur Behandlungseinheit kann unter anderem von der Größe der Behandlungseinheit sowie von der Größe des aufzubereitenden faserverstärkten Kunststoffs abhängen. Vorzugsweise ist die Zerkleinerungseinheit in der Behandlungseinheit angeordnet. Dann kann die Zuführeinheit zum Zuführen des Trockeneisstrahls auch zum Zerkleinern verwendet werden. Dies vereinfacht die Verfahrensführung erheblich und ermöglicht eine einfache Ausgestaltung der Vorrichtung.

Vorzugsweise weist die Vorrichtung weiters eine Abtrennungseinheit zum Abtrennen des Fremdstoffs vom faserverstärkten Kunststoff auf. Dadurch können beim nachfolgenden Behandeln des faserverstärkten Kunststoffs in der Behandlungseinheit die Verstärkungsfasern möglichst sortenrein vom Kunststoff abgetrennt werden.

Die Abtrennungseinheit kann der Behandlungseinheit entweder vorgeschaltet sein, oder sie kann in der Behandlungseinheit angeordnet sein. Die Anordnung der Abtrennungseinheit relativ zur Behandlungseinheit kann unter anderem von der Größe der Behandlungseinheit sowie von der Größe des aufzubereitenden faserverstärkten Kunststoffs abhängen. Vorzugsweise ist die Abtrennungseinheit in der Behandlungseinheit angeordnet. Dann kann die Zuführeinheit zum Zuführen des Trockeneisstrahls auch zum Abtrennen des Fremdstoffs verwendet werden. Dies vereinfacht die Verfahrensführung erheblich und ermöglicht eine einfache Ausgestaltung der Vorrichtung.

Vorzugsweise ist die Vorrichtung eine mobile Vorrichtung. Unter einer mobilen Vorrichtung wird eine Vorrichtung verstanden, die mit einem Lastkraftwagen, insbesondere einem Sattelkraftfahrzeug gemäß der Richtlinie 96/53/EG des Rates vom 25. Juli 1996, transportierbar und daher flexibel örtlich einsetzbar ist.

Die Vorrichtung ist vorzugsweise eingerichtet, in einem Container untergebracht zu werden, wobei der Container vorzugsweise ein Container nach der Norm ISO 668:2020-01 ist. Ein genormter Container kann unkompliziert transportiert werden, etwa mit einem LKW, einem Güterzug oder einem Frachtschiff. Vorzugsweise ist der Container ein 40-Fuß-Container, bevorzugter ein 20-Fuß-Container, besonders bevorzugt ein 10-Fuß-Container. Unter einem 40-Fuß-Container wird ein Container mit ungefähr 12,2 m Länge, 2,4 m Breite und 2,6 m Höhe verstanden. Unter einem 20-Fuß-Container wird ein Container mit ungefähr 6,1 m Länge, 2,4 m Breite und 2,6 m Höhe verstanden. Unter einem 10-Fuß-Container wird ein Container mit ungefähr 3 m Länge, 2,4 m Breite und 2,6 m Höhe verstanden.

Die Vorrichtung kann unter einem geringen Zeitaufwand, insbesondere innerhalb von 10 h oder weniger, in den Container verladen werden und nachfolgend an einen anderen Einsatzort transportiert werden, wo sie ebenfalls unter einem geringen Zeitaufwand, insbesondere innerhalb von 10 h oder weniger, in einen einsatzfähigen Zustand gebracht werden kann. Die Erfindung ermöglicht somit einen unkomplizierten und flexiblen Einsatz der Vorrichtung und des Verfahrens. Das Verfahren kann auch direkt im Container durchgeführt werden. Dies kann die Flexibilität der Vorrichtung und des Verfahrens weiter verbessern, da ein Verladen und Entladen des Containers entfallen kann.

Die Erfindung betrifft insbesondere die folgenden Ausführungsformen:
1. Verfahren zur Rückgewinnung von Verstärkungsfasern aus einem faserverstärkten Kunststoff, umfassend die Schritte
   (a) Bereitstellen des faserverstärkten Kunststoffs,
   (b) Erhitzen des faserverstärkten Kunststoffs auf eine Temperatur T, wobei T ≥ Tg - 50 °C, und Tg die Glasübergangstemperatur des faserverstärkten Kunststoffs ist, und
   (c) Behandeln des erhitzten, faserverstärkten Kunststoffs mit einem Trockeneisstrahl bei einem Druck des Trockeneisstrahls von 3 bar oder darüber, um die Verstärkungsfasern zumindest teilweise vom Kunststoff abzutrennen und rückzugewinnen.
2. Verfahren nach Ausführungsform 1, wobei der bereitgestellte, faserverstärkte Kunststoff eine Länge von 15 m oder darunter aufweist, vorzugsweise von 10 m oder darunter, bevorzugter von 5 m oder darunter; und/oder wobei der bereitgestellte, faserverstärkte Kunststoff eine Fläche von 20 m² oder darunter aufweist, vorzugsweise von 15 m² oder darunter, bevorzugter von 10 m² oder darunter, noch bevorzugter von 5 m² oder darunter.
3. Verfahren nach Ausführungsform 1 oder 2, wobei der bereitgestellte, faserverstärkte Kunststoff durch Zerkleinern erhalten wird, wobei das Zerkleinern des faserverstärkten Kunststoffs vorzugsweise mit einem Trockeneisstrahl erfolgt.
4. Verfahren nach einer der Ausführungsformen 1 bis 3, wobei vor Schritt (a) ein Fremdstoff vom faserverstärkten Kunststoff abgetrennt wird, vorzugsweise wobei der Fremdstoff ein Metall, einen Kunststoffschaum, eine Beschichtung, einen Lack, einen Klebstoff, ein Holz, eine Keramik oder eine Mischung davon enthält.
5. Verfahren nach Ausführungsform 4, wobei der Fremdstoff vor Schritt (a) mit einem Trockeneisstrahl vom faserverstärkten Kunststoff abgetrennt wird.
6. Verfahren nach einer der Ausführungsformen 1 bis 5, wobei die Temperatur T, auf die der faserverstärkte Kunststoff in Schritt (b) erhitzt wird, die Bedingung T ≥ Tg - 40 °C erfüllt, vorzugsweise T ≥ Tg - 30 °C, bevorzugter T ≥ Tg - 20 °C, noch bevorzugter T ≥ Tg - 10 °C, besonders bevorzugt T ≥ Tg.
7. Verfahren nach einer der Ausführungsformen 1 bis 6, wobei die Temperatur T, auf die der faserverstärkten Kunststoff in Schritt (b) erhitzt wird, die Bedingung Tg - 50 °C ≤ T ≤ 400 °C erfüllt, vorzugsweise Tg - 50 °C ≤ T ≤ 350 °C, noch bevorzugter Tg - 50 °C ≤ T ≤ 300 °C, besonders bevorzugt Tg - 50 °C ≤ T ≤ 260 °C.
8. Verfahren nach einer der Ausführungsformen 1 bis 7, wobei die Temperatur T, auf die der faserverstärkte Kunststoff in Schritt (b) erhitzt wird, bei 100 °C oder darüber liegt, vorzugsweise bei 150 °C oder darüber, bevorzugter bei 200 °C oder darüber, noch bevorzugter bei 250 °C oder darüber, noch bevorzugter bei 300 °C oder darüber.
9. Verfahren nach einer der Ausführungsformen 1 bis 8, wobei die Temperatur T, auf die der faserverstärkte Kunststoff in Schritt (b) erhitzt wird, bei 400 °C oder darunter liegt, vorzugsweise bei 350 °C oder darunter, bevorzugter bei 300 °C oder darunter, noch bevorzugter bei 260 °C oder darunter.
10. Verfahren nach einer der Ausführungsformen 1 bis 9, wobei eine Differenz der thermischen Längenausdehnungskoeffizienten des Kunststoffs und der Verstärkungsfasern in Faserrichtung bei 40 · 10⁻⁶ K⁻¹ oder darüber liegt, vorzugsweise bei 50 · 10⁻⁶ K⁻¹ oder darüber, noch bevorzugter bei 60 · 10⁻⁶ K⁻¹ oder darüber.
11. Verfahren nach einer der Ausführungsformen 1 bis 10, wobei das Behandeln des faserverstärkten Kunststoffs mit dem Trockeneisstrahl bei einem Druck des Trockeneisstrahls von 4 bar oder darüber erfolgt, vorzugsweise von 5 bar oder darüber, bevorzugter von 6 bar oder darüber, noch bevorzugter von 8 bar oder darüber; vorzugsweise wobei das Behandeln bei einem Druck von 2 bis 17 bar erfolgt, bevorzugter von 4 bis 12 bar, noch bevorzugter von 5 bis 10 bar.
12. Verfahren nach einer der Ausführungsformen 1 bis 11, wobei der faserverstärkte Kunststoff auch in Schritt (c) erhitzt wird.
13. Verfahren nach einer der Ausführungsformen 1 bis 12, wobei der faserverstärkte Kunststoff mit einem Massenstrom des Trockeneisstrahls von 30 kg/h oder darüber behandelt wird, vorzugsweise von 40 kg/h oder darüber, bevorzugter von 45 kg/h oder darüber, noch bevorzugter von 60 kg/h oder darüber, besonders bevorzugt von 70 kg/h oder darüber.
14. Verfahren nach Ausführungsform 13, wobei der Massenstrom des Trockeneisstrahls im Bereich von 30 bis 200 kg/h liegt, vorzugsweise von 40 bis 160 kg/h, bevorzugter von 45 kg/h bis 100 kg/h, besonders bevorzugt von 75 bis 85 kg/h.
15. Verfahren nach einer der Ausführungsformen 1 bis 14, wobei der Trockeneisstrahl in einem Winkel von maximal 20° abweichend von der Faserrichtung auf den faserverstärkten Kunststoff auftrifft, vorzugsweise maximal 15°, bevorzugter maximal 10°, noch bevorzugter maximal 5°, besonders bevorzugt maximal 2,5°.
16. Verfahren nach einer der Ausführungsformen 1 bis 15, wobei der Trockeneisstrahl beim Behandeln des faserverstärkten Kunststoffs relativ zum faserverstärkten Kunststoff bewegt wird, vorzugsweise mit einer Geschwindigkeit von 0,1 m/min oder darüber, bevorzugter 0,3 m/min oder darüber, noch bevorzugter 0,5 m/min oder darüber; und/oder mit einer Geschwindigkeit von 1,5 m/min oder darunter, bevorzugter 1,0 m/min oder darunter, noch bevorzugter 0,8 m/min oder darunter.
17. Verfahren nach einer der Ausführungsformen 1 bis 16, wobei das Behandeln des faserverstärkten Kunststoffs mit dem Trockeneisstrahl unter Unterdruck erfolgt.
18. Verfahren nach Ausführungsform 17, wobei das Behandeln des faserverstärkten Kunststoffs bei einem Druck von 800 mbar oder darunter erfolgt, vorzugsweise von 700 mbar oder darunter, bevorzugter von 600 mbar oder darunter.
19. Verfahren nach einer der Ausführungsformen 1 bis 18, wobei das Behandeln des faserverstärkten Kunststoffs mit dem Trockeneisstrahl in einer Atmosphäre erfolgt, die zumindest 50 Vol% Kohlenstoffdioxid enthält, vorzugsweise zumindest 70 Vol%, bevorzugter zumindest 90 Vol%, noch bevorzugter zumindest 99 Vol%, besonders bevorzugt 100 Vol%, jeweils bezogen auf das Volumen der Atmosphäre.
20. Verfahren nach einer der Ausführungsformen 1 bis 19, wobei der erhitzte, faserverstärkte Kunststoff in Schritt (c) gleichzeitig mit einem ersten Trockeneisstrahl und einem zweiten Trockeneisstrahl behandelt wird, wobei der erste Trockeneisstrahl in einem Winkel von maximal 5°, vorzugsweise maximal 2,5°, abweichend von der Faserrichtung auf den faserverstärkten Kunststoff auftrifft, und wobei der zweite Trockeneisstrahl in einem Winkel von mindestens 40°, vorzugsweise mindestens 42,5°, abweichend von derselben Faserrichtung auf den faserverstärkten Kunststoff auftrifft.
21. Verfahren nach Ausführungsform 20, wobei der erste Trockeneisstrahl im Wesentlichen in Faserrichtung auf den faserverstärkten Kunststoff auftrifft und der zweite Trockeneisstrahl im Wesentlichen senkrecht zur selben Faserrichtung.
22. Verfahren nach einer der Ausführungsformen 1 bis 21, wobei die vom Kunststoff zumindest teilweise abgetrennten Verstärkungsfasern eine Länge von 12 mm oder darüber aufweisen, vorzugsweise von 20 mm oder darüber, bevorzugter von 30 mm oder darüber, noch bevorzugter von 40 mm oder darüber.
23. Verfahren nach einer der Ausführungsformen 1 bis 22, umfassend einen weiteren Schritt (d), worin das in Schritt (c) beim Behandeln des faserverstärkten Kunststoffs mit dem Trockeneisstrahl entstandene, gasförmige Kohlenstoffdioxid gereinigt und zum Herstellen von Trockeneis verwendet wird, wobei das erhaltene Trockeneis vorzugsweise im Verfahren wiederverwendet wird.
24. Vorrichtung zur Rückgewinnung von Verstärkungsfasern aus einem faserverstärkten Kunststoff mit dem Verfahren nach einer der Ausführungsformen 1 bis 23, aufweisend
   einen Vorratsbehälter zum Bereitstellen von Trockeneis,
   eine Heizungseinheit zum Erhitzen des faserverstärkten Kunststoffs, und
   eine Behandlungseinheit zum Behandeln des faserverstärkten Kunststoffs mit dem Trockeneisstrahl,
   wobei die Behandlungseinheit eine mit dem Vorratsbehälter verbundene Zuführeinheit zum Zuführen des Trockeneisstrahls in die Behandlungseinheit aufweist,
   sowie gegebenenfalls eine mit der Behandlungseinheit verbundene Reinigungseinheit für das beim Behandeln des faserverstärkten Kunststoffs mit dem Trockeneisstrahl entstandene gasförmige Kohlenstoffdioxid.
25. Vorrichtung nach Ausführungsform 24, wobei der Vorratsbehälter über eine Pumpe, insbesondere eine Hochdruckpumpe, mit der Zuführeinheit verbunden ist, vorzugsweise wobei die Pumpe eingerichtet ist, einen Druck des Trockeneisstrahls von zumindest 4 bar zu erzeugen, bevorzugter zumindest 5 bar, noch bevorzugter zumindest 6 bar, besonders bevorzugt zumindest 8 bar.
26. Vorrichtung nach Ausführungsform 24 oder 25, wobei die Heizungseinheit in der Behandlungseinheit angeordnet ist.
27. Vorrichtung nach einer der Ausführungsformen 24 bis 26, wobei die Zuführeinheit eine Düse aufweist, vorzugsweise eine Runddüse oder eine Flachdüse, wobei die Düse vorzugsweise unmittelbar an die Austrittsöffnung der Zuführeinheit angrenzend angeordnet ist.
28. Vorrichtung nach einer der Ausführungsformen 24 bis 27, wobei die Zuführeinheit eine erste Austrittsöffnung und eine zweite Austrittsöffnung zum gleichzeitigen Zuführen eines ersten Trockeneisstrahls und eines zweiten Trockeneisstrahls in die Behandlungseinheit aufweist.
29. Vorrichtung nach einer der Ausführungsformen 24 bis 28, wobei die Behandlungseinheit zwei mit dem Vorratsbehälter verbundene Zuführeinheiten zum Zuführen eines ersten Trockeneisstrahls und eines zweiten Trockeneistrahls in die Behandlungseinheit aufweist.
30. Vorrichtung nach einer der Ausführungsformen 24 bis 29, wobei die Behandlungseinheit ein Förderband aufweist.
31. Vorrichtung nach einer der Ausführungsformen 24 bis 30, wobei die Behandlungseinheit einen Roboter aufweist, insbesondere einen Knickarmroboter.
32. Vorrichtung nach Ausführungsform 31, wobei die Zuführeinheit an einem Arm des Roboters befestigt ist, vorzugsweise wobei die Austrittsöffnung der Zuführeinheit an einem distalen Ende des Arms angeordnet ist.
33. Vorrichtung nach Ausführungsform 31 oder 32, wobei die Behandlungseinheit einen Sensor aufweist, der eingerichtet ist, einen Arbeitsraum des Roboters zu erfassen.
34. Vorrichtung nach einer der Ausführungsformen 31 bis 33, wobei die Vorrichtung eine Steuereinheit aufweist, die mit dem Sensor verbunden ist und eingerichtet ist, auf Grundlage eines vom Sensor übermittelten Signals den Roboter zu steuern.
35. Vorrichtung nach einer der Ausführungsformen 24 bis 34, wobei die Behandlungseinheit eine Pumpe aufweist, die eingerichtet ist, in der Behandlungseinheit einen bestimmten Druck, insbesondere einen Unterdruck, einzustellen.
36. Vorrichtung nach einer der Ausführungsformen 24 bis 35, weiters aufweisend einen Sammelbehälter zum Sammeln der vom Kunststoff zumindest teilweise abgetrennten Verstärkungsfasern aufweist.
37. Vorrichtung nach einer der Ausführungsformen 24 bis 36, weiters aufweisend eine Reinigungseinheit, die mit der Behandlungseinheit verbunden ist.
38. Vorrichtung nach Ausführungsform 37, wobei die Reinigungseinheit einen Membranfilter aufweist.
39. Vorrichtung nach einer der Ausführungsformen 24 bis 38, weiters aufweisend einen Abzug zum Abziehen von gasförmigem Kohlenstoffdioxid aus der Behandlungseinheit.
40. Vorrichtung nach einer der Ausführungsformen 24 bis 39, wobei die Reinigungseinheit mit dem Vorratsbehälter verbunden ist.
41. Vorrichtung nach einer der Ausführungsformen 24 bis 40, weiters aufweisend eine Zerkleinerungseinheit zum Zerkleinern des faserverstärkten Kunststoffs, wobei die Zerkleinerungseinheit vorzugsweise in der Behandlungseinheit angeordnet ist.
42. Vorrichtung nach einer der Ausführungsformen 24 bis 41, weiters aufweisend eine Abtrennungseinheit zum Abtrennen eines Fremdstoffs vom faserverstärkten Kunststoff, wobei die Abtrennungseinheit vorzugsweise in der Behandlungseinheit angeordnet ist.
43. Vorrichtung nach einer der Ausführungsformen 41 bis 42, wobei die Vorrichtung eine mobile Vorrichtung ist.
44. Vorrichtung nach einer der Ausführungsformen 24 bis 43, wobei die Vorrichtung eingerichtet ist, in einem Container untergebracht zu werden, wobei der Container vorzugsweise ein Container nach der Norm ISO 668:2020-01 ist.
45. Vorrichtung nach Ausführungsform 44, wobei der Container ein 40-Fuß-Container ist, bevorzugt ein 20-Fuß-Container, besonders bevorzugt ein 10-Fuß-Container.

Die Erfindung wird nachstehend anhand von Figurenbeschreibungen einiger Ausführungsformen weiter erläutert. Diese Ausführungsformen sind bevorzugte Ausführungsbeispiele, auf welche die Erfindung nicht beschränkt sein soll.
Fig. 1 zeigt ein Fließschema eines Verfahrens zur Rückgewinnung von Verstärkungsfasern aus einem faserverstärkten Kunststoff.
Fig. 2 zeigt den schematischen Aufbau einer Behandlungseinheit.
Fig. 3 zeigt ein weiteres Fließschema eines Verfahrens zur Rückgewinnung von Verstärkungsfasern aus einem faserverstärkten Kunststoff.

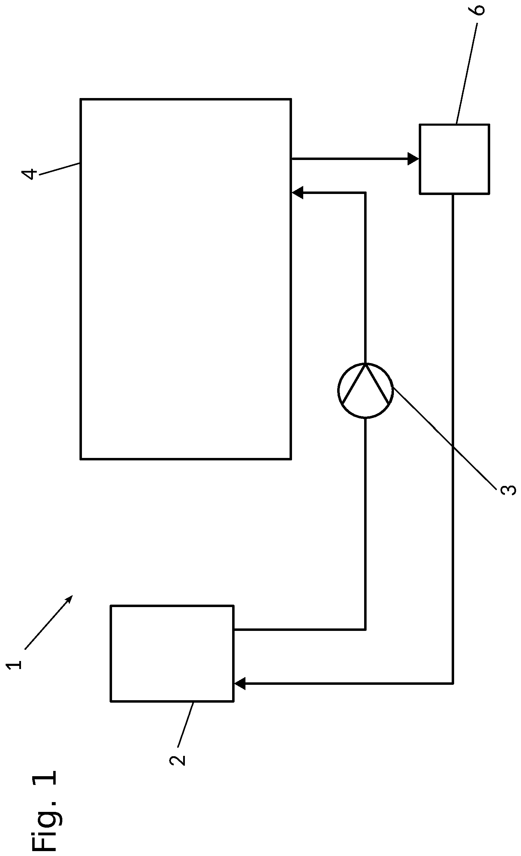

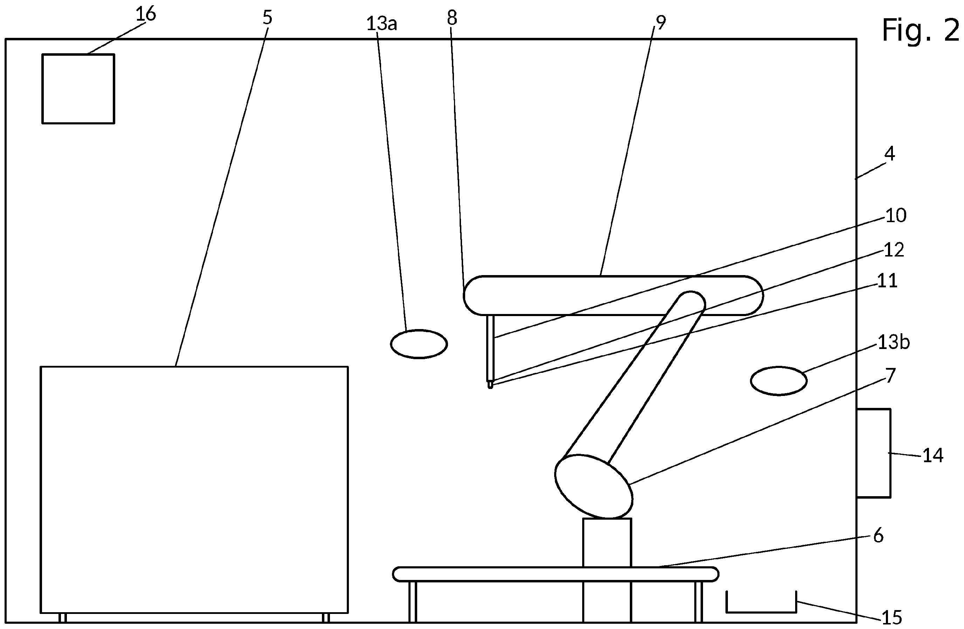

In Fig. 1 ist ein Fließschema eines Verfahrens zur Rückgewinnung von Verstärkungsfasern aus einem faserverstärkten Kunststoff mit einer Vorrichtung 1 schematisch dargestellt. Trockeneis wird in einem Vorratsbehälter 2 zur Verfügung gestellt. Der Vorratsbehälter 2 ist über eine Pumpe 3 mit einer Behandlungseinheit 4, in welcher eine Heizungseinheit 5 (siehe Fig. 2) angeordnet ist, verbunden. Ein erhitzter, faserverstärkter Kunststoff wird in der Behandlungseinheit 4 mit einem aus dem Vorratsbehälter 2 zugeführten Trockeneisstrahl behandelt, um Verstärkungsfasern zumindest teilweise vom Kunststoff abzutrennen. Gasförmiges Kohlenstoffdioxid wird anschließend in einer Reinigungseinheit 6, die mit der Behandlungseinheit 4 verbunden ist, gereinigt. Dabei werden kunststoffhaltige Verunreinigungen (z.B. Kunststoffstaub, Kunststoffpartikel) und ggf. andere Gase (z.B. Sauerstoff, Stickstoff) vom gasförmigen Kohlenstoffdioxid abgetrennt. Das gereinigte, gasförmige Kohlenstoffdioxid wird danach dem Vorratsbehälter 2 zugeführt, wo durch entsprechende Druck- und Temperaturführung Trockeneis aus dem gasförmigen Kohlenstoffdioxid zur Wiederverwendung im Verfahren gemäß der Erfindung hergestellt werden kann.

Aus Fig. 2 ist der schematische Aufbau der Behandlungseinheit 4 der Vorrichtung 1 der Fig. 1 zum Behandeln eines erhitzten, faserverstärkten Kunststoffs mit einem Trockeneisstrahl ersichtlich. In der Behandlungseinheit 4 ist eine Heizeinrichtung 5 angeordnet, um den faserverstärkten Kunststoff auf die Temperatur T zu erhitzen. Die Behandlungseinheit 4 weist ein Förderband 6 auf, auf welchem der faserverstärkte Kunststoff während des Behandelns mit dem Trockeneisstrahl untergebracht sein kann. Weiters weist die Behandlungseinheit 4 einen Roboter 7 auf. An einem distalen Ende 8 eines Arms 9 des Roboters 7 ist eine Zuführeinheit 10 zum Zuführen des Trockeneisstrahls befestigt. Die Zuführeinheit 10 ist über eine Leitung (nicht dargestellt) mit dem Vorratsbehälter 2 (siehe Fig. 1) verbunden, um Trockeneis zuzuführen. Die Zuführeinheit 10 weist eine Austrittsöffnung 11 auf, durch welche der Trockeneisstrahl aus der Zuführeinheit 10 austreten kann. Unmittelbar an die Austrittsöffnung 11 angrenzend ist eine Düse 12 angeordnet. Mittels der Düse 12 kann die Geschwindigkeit, mit welcher der Trockeneisstrahl aus der Zuführeinheit 10 austritt, erhöht werden. Die Behandlungseinheit 4 weist außerdem zwei Sensoren 13a, 13b auf, die eingerichtet sind, einen Arbeitsraum des Roboters 7 zu erfassen. Weiters weist die Vorrichtung 1 eine Steuereinheit 14 auf, die mit den Sensoren 13a, 13b verbunden und eingerichtet ist, auf Grundlage eines von den Sensoren 13a, 13b übermittelten Signals den Roboter 7 zu steuern. Die Steuereinheit 14 ist an einer Außenseite der Behandlungseinheit 4 angeordnet, sodass ein Benutzer den Roboter 7 steuern kann, ohne die Behandlungseinheit 4 zu betreten. An einem Ende des Förderbands 6 ist ein Sammelbehälter 15 derart angeordnet, dass vom faserverstärkten Kunststoff abgetrennte Verstärkungsfasern, die auf das Förderband 6 gefallen sind, durch entsprechendes Bewegen des Förderbands 6 in den Sammelbehälter fallen können. Weiters weist die Behandlungseinheit 4 eine Pumpe 16 auf, die eingerichtet ist, in der Behandlungseinheit 4 einen Unterdruck einzustellen. Auch ein Abzug (nicht dargestellt) ist vorgesehen, um gasförmiges Kohlenstoffdioxid aus der Behandlungseinheit abzuziehen und der Reinigungseinheit 6 (siehe Fig. 1) zuzuführen.

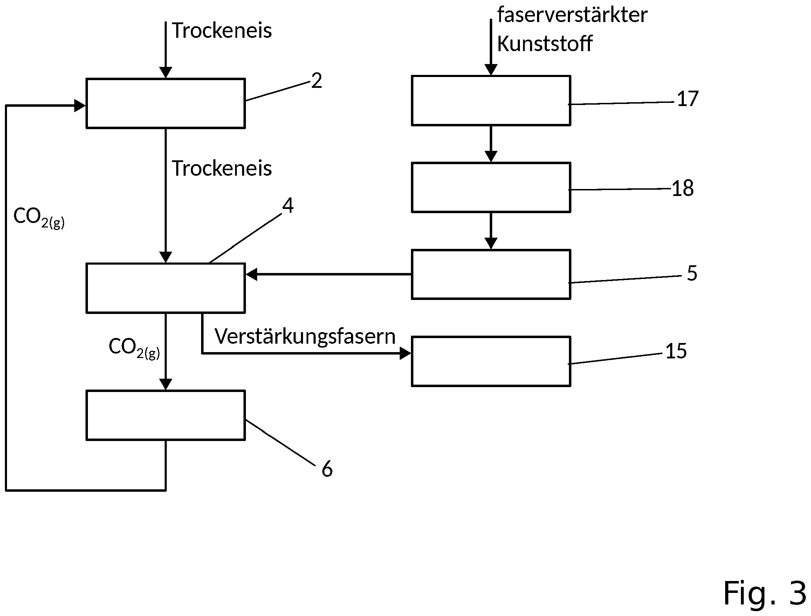

Fig. 3 zeigt ein weiteres, schematisches Fließschema eines Verfahrens zur Rückgewinnung von Verstärkungsfasern aus einem faserverstärkten Kunststoff. Trockeneis wird in einem Vorratsbehälter 2 zur Verfügung gestellt und gelangt in Form eines Trockeneisstrahls in die Behandlungseinheit 4. Der faserverstärkte Kunststoff wird zunächst in einer Zerkleinerungseinheit 17 zerkleinert, nachfolgend werden in einer Abtrennungseinheit 18 Fremdstoffe (z.B. Metalle, Kunststoffschaum, Lacke, Beschichtungen, Klebstoffe, Holz) vom zerkleinerten, faserverstärkten Kunststoff abgetrennt. Der faserverstärkte Kunststoff wird dann mittels einer Heizungseinheit 5 auf die Temperatur T erhitzt und anschließend in der Behandlungseinheit 4 mit dem Trockeneisstrahl behandelt, um Verstärkungsfasern zumindest teilweise vom Kunststoff abzutrennen. Gasförmiges Kohlenstoffdioxid (CO_{2(g)}) wird anschließend in einer Reinigungseinheit 6 gereinigt. Dabei werden kunststoffhaltige Verunreinigungen (z.B. Kunststoffstaub, Kunststoffpartikel) und ggf. andere Gase (z.B. Sauerstoff, Stickstoff) vom gasförmigen Kohlenstoffdioxid abgetrennt. Das gereinigte, gasförmige Kohlenstoffdioxid wird danach dem Vorratsbehälter 2 zugeführt, wo durch entsprechende Druck- und Temperaturführung Trockeneis aus dem gasförmigen Kohlenstoffdioxid zur Wiederverwendung im Verfahren gemäß der Erfindung hergestellt werden kann. Die zumindest teilweise abgetrennten Verstärkungsfasern werden im Sammelbehälter 15 gesammelt.

Die Erfindung wird weiters anhand von Beispielen beschrieben, auf die sie nicht beschränkt sein soll.

### Beispiel 1

Ein mit einem Glasfasergewebe verstärktes Epoxidharz wurde bei Raumtemperatur (25 °C) mit einem Trockeneisstrahl (10 bar, 80 kg/h) behandelt. Weder ein Bestrahlen senkrecht zur Faserrichtung noch ein Bestrahlen in Faserrichtung zeigten eine Wirkung.

### Beispiel 2

Ein glasfaserverstärktes Epoxidharz wurde auf unterschiedliche Temperaturen (150, 200, 250, 300, 350 °C) erhitzt. Das Behandeln erfolgte senkrecht zur Faserrichtung unter Variation des Drucks (bis zu 10 bar) und des Massenstroms (bis zu 80 kg/h) des Trockeneisstrahls. Je höher die Temperatur, der Druck und der Massenstrom waren, umso besser konnten die Verstärkungsfasern vom Kunststoff abgetrennt werden. Die abgetrennten Verstärkungsfasern hatten großteils nur eine Länge von 1 mm oder darunter.

### Beispiel 3

Ein glasfaserverstärktes Epoxidharz wurde in einem ersten Schritt auf eine Temperatur von 250 °C erhitzt und bei einem Druck von 10 bar und einem Massenstrom von 80 kg/h des Trockeneisstrahls in Faserrichtung behandelt. Es kam bereits nach ca. 2 sec Behandlungsdauer zu einem beginnenden Abtrennen der Verstärkungsfasern vom Epoxidharz, wobei sich ein 6 bis 7 cm langer Riss ausbildete. In einem zweiten Schritt erfolgte ein Bestrahlen (250 °C, 5 bar Druck, 50 kg/h Massenstrom) senkrecht zur Faserrichtung an der Stelle, an der sich der Riss befand. Nach einer Bestrahlungsdauer von ca. 3 sec lösten sich die Verstärkungsfasern vom Epoxidharz.

### Beispiel 4

Ein glasfaserverstärktes Epoxidharz wurde bei den folgenden Parametern behandelt: Temperatur von 300 °C, sowie Druck von 10 bar und Massenstrom von 80 kg/h des Trockeneisstrahls. Das

Bestrahlen erfolgte in Faserrichtung. Die Temperatur von 300 °C erwies sich als zu hoch, die Glasfasern zerbrachen in kleine Stücke.

### Beispiel 5

Ein glasfaserverstärktes Epoxidharz wurde auf eine Temperatur T von 250 °C erhitzt, diese wurde durch weiterführendes Erhitzen im Wesentlichen auch während des Behandlungsschritts beibehalten. Das Behandeln erfolgte gleichzeitig mit einem ersten Trockeneisstrom (10 bar, 80 kg/h, Runddüse) in Faserrichtung und mit einem zweiten Trockeneisstrom (6 bar, 50 kg/h, Flachdüse) senkrecht zur Faserrichtung. Der zweite Trockeneisstrom wurde während der Behandlung kontinuierlich relativ zum faserverstärkten Epoxidharz bewegt. Mit diesem Versuch konnte das beste Ergebnis erhalten werden. Die Verstärkungsfasern wurden auf einer Länge von 4 cm, einer Höhe von 2,5 cm und einer Breite von 1 cm vom Epoxidharz abgetrennt, und eine Länge der Verstärkungsfasern von zumindest 80% blieb erhalten, bezogen auf die ursprüngliche Faserlänge.

## Patentansprüche

**1.** Verfahren zur Rückgewinnung von Verstärkungsfasern aus einem faserverstärkten Kunststoff, umfassend die Schritte
(a) Bereitstellen des faserverstärkten Kunststoffs,
(b) Erhitzen des faserverstärkten Kunststoffs auf eine Temperatur T, wobei T ≥ Tg - 50 °C, und Tg die Glasübergangstemperatur des faserverstärkten Kunststoffs ist, und
(c) Behandeln des erhitzten, faserverstärkten Kunststoffs mit einem Trockeneisstrahl bei einem Druck des Trockeneisstrahls von 3 bar oder darüber, um die Verstärkungsfasern zumindest teilweise vom Kunststoff abzutrennen und rückzugewinnen.

**2.** Verfahren nach Anspruch 1, wobei in Schritt (b) die Temperatur T, auf welche der faserverstärkte Kunststoff erhitzt wird, die Bedingung Tg - 50 °C ≤ T ≤ 260 °C erfüllt.

**3.** Verfahren nach Anspruch 2, wobei in Schritt (b) die Temperatur T, auf welche der faserverstärkte Kunststoff erhitzt wird, die Bedingung Tg ≤ T ≤ 260 °C erfüllt.

**4.** Verfahren nach einem der Ansprüche 1 bis 3, wobei das Behandeln des faserverstärkten Kunststoffs mit dem Trockeneisstrahl in Schritt (c) bei einem Druck des Trockeneisstrahls von 5 bar oder darüber erfolgt.

**5.** Verfahren nach einem der Ansprüche 1 bis 4, wobei das Behandeln des faserverstärkten Kunststoffs mit dem Trockeneisstrahl in Schritt (c) bei einem Druck des Trockeneisstrahls von 5 bis 10 bar erfolgt.

**6.** Verfahren nach einem der Ansprüche 1 bis 5, wobei in Schritt (c) das Behandeln des faserverstärkten Kunststoffs mit dem Trockeneisstrahl in einer Atmosphäre erfolgt, die zumindest 90 Vol% Kohlenstoffdioxid enthält.

**7.** Verfahren nach einem der Ansprüche 1 bis 6, weiters umfassend einen Schritt (d), worin das in Schritt (c) beim Behandeln des faserverstärkten Kunststoffs mit dem Trockeneisstrahl entstandene gasförmige Kohlenstoffdioxid gereinigt und zum Herstellen von Trockeneis verwendet wird, welches vorzugsweise im Verfahren wiederverwendet wird.

**8.** Vorrichtung (1) zur Rückgewinnung der Verstärkungsfasern aus einem faserverstärkten Kunststoff mit dem Verfahren nach einem der Ansprüche 1 bis 7, aufweisend
einen Vorratsbehälter (2) zum Bereitstellen von Trockeneis,
eine Heizungseinheit (5) zum Erhitzen des faserverstärkten Kunststoffs, und
eine Behandlungseinheit (4) zum Behandeln des faserverstärkten Kunststoffs mit dem Trockeneisstrahl, wobei die Behandlungseinheit (4) eine mit dem Vorratsbehälter (2) verbundene Zuführeinheit (10) zum Zuführen des Trockeneisstrahls in die Behandlungseinheit (4) aufweist,
sowie gegebenenfalls eine mit der Behandlungseinheit (4) verbundene Reinigungseinheit (6) für das beim Behandeln des faserverstärkten Kunststoffs mit dem Trockeneisstrahl entstandene gasförmige Kohlenstoffdioxid.

**9.** Vorrichtung (1) nach Anspruch 8, wobei die Behandlungseinheit (4) ein Förderband (6) aufweist.

**10.** Vorrichtung (1) nach Anspruch 8 oder 9, wobei die Heizungseinheit (5) in der Behandlungseinheit (4) angeordnet ist.

**11.** Vorrichtung (1) nach einem der Ansprüche 8 bis 10, wobei die Behandlungseinheit (4) einen Roboter (7) aufweist, wobei die Zuführeinheit (10) an einem Arm (9) des Roboters (7) befestigt ist.

**12.** Vorrichtung (1) nach einem der Ansprüche 8 bis 11, wobei die Behandlungseinheit (4) zwei mit dem Vorratsbehälter (1) verbundene Zuführeinheiten (10) zum Zuführen eines ersten Trockeneisstrahls und eines zweiten Trockeneistrahls in die Behandlungseinheit (4) aufweist.

**14.** Vorrichtung (1) nach einem der Ansprüche 8 bis 13, weiters aufweisend eine in der Behandlungseinheit (4) angeordnete Zerkleinerungseinheit (17) zum Zerkleinern des faserverstärkten Kunststoffs.

**15.** Vorrichtung (1) nach einem der Ansprüche 8 bis 14, weiters aufweisend eine in der Behandlungseinheit (4) angeordnete Abtrennungseinheit (18) zum Abtrennen eines Fremdstoffs vom faserverstärkten Kunststoff.
